# EUROPEAN PATENT SPECIFICATION

(11) **EP 3 015 226 B1**
(45) Date of publication and mention of the grant of the patent: **28.12.2016**
(21) Application number: 13887812.9
(22) Date of filing: 26.06.2013
(51) Int. Cl.: B25G 1/10, B21C 37/08, B23P 15/00

(54) **METHOD FOR PRODUCING HANDLES FOR CLEANING UTENSILS**
VERFAHREN ZUR HERSTELLUNG VON TRAGEGRIFFEN FÜR REINIGUNGSVORRICHTUNGEN
PROCÉDÉ DE FABRICATION DE MANCHES POUR USTENSILES DE NETTOYAGE

(43) Date of publication of application: 04.05.2016
(73) Proprietor: SP Berner Plastic Group, S.L., 46960 Aldaia (Valencia) (ES)
(72) Inventor: ESCARPA GIL, Julián, E-46960 Aldaia (Valencia) (ES)
(74) Representative: Ungria López, Javier
(86) International application number: PCT/ES2013/070427
(87) International publication number: WO 2014/207264

(56) References cited:
- EP-A1- 1 068 935
- CN-Y- 2 820 460
- GB-A- 848 272
- US-A- 3 616 983
- US-A- 4 621 399
- US-A1- 2011 165 351

## Description

### OBJECT OF THE INVENTION

The present invention, as expressed in the wording of this specification, relates to a method for manufacturing handles for cleaning utensils, such as brooms, dust mops, mops, etc.

Basically, it is a method to put into practice the handle for cleaning utensils described in the invention patent identified with Spanish publication number ES 2225075, which corresponds to EP 1 068 935 A1 and is owned by the same holder of the present invention.

The method of the invention ensures a correct attachment of the different elements making up the handle, while providing a handle with a pleasant touch for the hands of the user.

### BACKGROUND OF THE INVENTION

Handles for cleaning utensils such as brooms, dust mops, mops and similar are currently known, among which we have those that comprise a metal tubular body which is covered on the outside by one or more coating layers of plastic material.

For example, invention patent identified with Spanish publication number ES 2225075 consists of a handle for cleaning utensils and similar having a base body providing the general shape of the handle, such that said base body is successively covered by a first layer of adhesive, a second layer of plastic material and a third layer also of plastic material. The third layer has a similar thickness and nature than the second layer.

The method for manufacturing this type of handles presents problems in the adhesion of the layer of adhesive or glue to the metal surface of the metal tubular body, which causes problems in the affixing of the subsequent layers of plastic material.

It has also been proven that the use of co-extrusion systems for the application of the different layers causes problems in the final result, which comes to a deficient adhesion among layers, an excessively matte finish and a lower-quality touch that is also unpleasant.

### DESCRIPTION OF THE INVENTION

With the purpose of achieving the objectives and avoiding the inconveniences mentioned in the previous sections, the invention proposes in claim 1 a method for manufacturing handles for cleaning utensils aimed at obtaining handles comprising a core formed by a metal tube covered by several surrounding layers of plastic material.

Preferred embodiments are stated in the dependent claims.

The method comprises the following steps:
- Cleaning at least one outer face of a metal strip by means of the application of a degreasing product, eliminating the traces of cutting and coolant fluid and industrial oils inherent to the cutting and manufacturing processes of the metal strip.
- Brushing the outer face of the metal strip to eliminate residue and condition its surface to achieve a better adhesion.
- Deforming the metal strip to form an open tubular structure with two facing longitudinal edges close to each other.
- Heating the longitudinal edges of the open tubular structure of the metal strip up to a welding temperature.
- Closing completely the open tubular structure of the metal strip until the longitudinal edges touch each other, maintaining its welding temperature; a metal tube is formed in this step when the two longitudinal edges are attached by means of a welding generatrix.
- Eliminating irregularities in the metal tube by means of a smoothing, grinding and hardening process.
- Eliminating impurities, such as grease and slag, coming from the welding process, where the elimination of impurities is carried out through mechanical and friction processes, such as grinding wheels.
- Heating the metal tube up to a temperature delimited between 125 and 150 °C.
- Applying a first layer of adhesive on the outer face of the metal tube at a hot temperature delimited between 225 and 230 °C.
- Applying a second layer of plastic material on the first layer of adhesive, also at a hot temperature delimited between 200 and 250 °C.
- Applying a third layer of plastic material on the second layer of plastic material with a hot temperature between 200 and 250 °C; where the fluidity of this third layer is greater than the fluidity of the second layer.
- Cooling the set of the metal tube (2) with its three layers in a first cooling pond.
- Cooling the set of the metal tube with its three layers in a second cooling pond after being in the first cooling pond; the temperature of the second cooling pond being lower than the temperature of the first cooling pond.
- The temperature of the metal tube is kept hot during the application of the three layers: first, second and third.

The brushing of the outer face of the metal strip is carried out by means of a brushing device incorporating rotating brushes.

The deformation of the metal strip is carried out by means of a first rotating roller device.

The longitudinal edges of the open tubular structure of the metal strip are heated by means of a first induction device.

The formation of the metal tube is completed by means of a second rotating roller device.

Once formed, the elimination of the irregularities of the metal tube is carried out by means of laminating rollers for forming and by means of laminating rollers for grinding and alignment.

Once formed, the metal tube is heated by means of a second induction device.

The first layer of adhesive is a glue material.

The fluidity of the second layer of plastic material is delimited between 5 and 8 degrees in a preferred embodiment.

On the other hand, the fluidity of the third layer of plastic material is delimited between 55 and 65 degrees, also in a preferred embodiment.

The cooling temperature of the metal tube inside the first pond is delimited between 20 and 30 °C, while the temperature of the second pond is delimited between 10 and 14 °C.

The method of the invention comprises an optional intermediate step applied after the formation of the metal tube, which verifies the correct surface and structural finish of said metal tube by means of artificial vision devices.

The application of the layers: first, second and third, is carried out by means of a co-extrusion device where an inner space through which the metal tube advances is defined, the different coating layers of the handle being applied during the advance thereof.

In an embodiment of the invention, the second and third layers of plastic material are made of a polypropylene material from the polypropylene family.

Next, in order to facilitate a better comprehension of this specification and as an integral part thereof, figures representing the object of the invention in an illustrative rather than limitative manner have been attached.

### BRIEF DESCRIPTION OF THE DRAWINGS

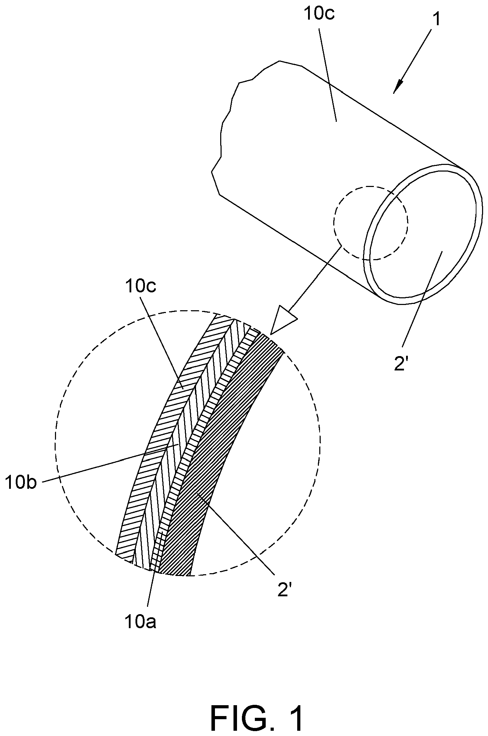

**Figure 1****.** Shows a perspective view of a handle for cleaning utensils obtained by means of the method of the invention. The handle basically comprises a metal tube, covered by a first coating layer of adhesive, a second coating layer of plastic material and a third coating layer also of plastic material.

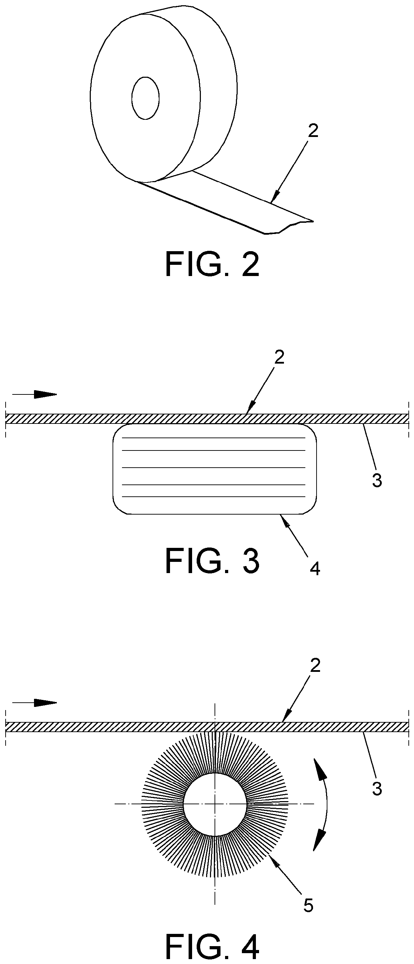

**Figure 2****.** Shows a perspective view of the metal strip from which each metal tube of the handle is obtained.
**Figure 3****.** Shows a view of a step of the manufacturing method wherein one of the faces of the metal strip is submitted to a cleaning process. Said face of the strip corresponds to an outer face of the metal tube, which is subsequently covered with the first layer of adhesive material.
**Figure 4****.** Shows a view of a step of the manufacturing method wherein one of the faces of the metal strip is submitted to a preparation process to improve the adhesion of the first layer of adhesive material.
**Figures 5 to 8****.** Show different steps or steps of formation of the metal tube for the formation of the handle for cleaning utensils.
**Figure 9****.** Shows a view wherein the metal tube is heated up to an established temperature margin.
**Figure 10****.** Shows a view where the first layer of adhesive material and the two other layers of plastic material: second and third, are incorporated while hot.
**Figure 11****.** Shows a view where the set of the metal tube and the three concentric layers covering the same are submitted to a controlled cooling process.

### DESCRIPTION OF THE PREFERRED EMBODIMENT

Taking into account the numbering adopted in the figures, the method for manufacturing handles for cleaning utensils contemplates the following nomenclature used in the description:
1.- Handle
2.- Metal strip
2'.- Metal tube
3.- Outer face
4.- Cleaning device
5.- Brushing device
6.- Longitudinal edges
6'.- Welding generatrix
7.- Laminating rollers for forming
8.- Laminating rollers for grinding and alignment
9.- First induction device
9'.- Second induction device
10.- Co-extrusion station
10a.- First layer
10b.- Second layer
10c.- Third layer
11.- First cooling pond
12.- Second cooling pond
13.- First rotating roller device
13'.- Second rotating roller device

The handle 1 to be obtained comprises a metal tube 2', a first layer 10a of adhesive material, a second layer 10b of plastic material and a third layer 10c, also of plastic material.

Based on what was said in the previous paragraph, in order to obtain the handle 1 the method begins with a metal strip 2 made of laminated iron having a thickness comprised between 0.2 and 0.35 mm and a variable width, such that the tube 2' is formed based on said metal strip 2 depending on the final diameter of the handle 1 to be obtained.

One face of the metal strip 2, to be referred to as the outer face 3, is subsequently submitted to a cleaning process by making the metal strip pass through a cleaning device 4 that applies a degreasing liquid or product, such that the traces of cutting and cooling fluid and industrial oils inherent to the cutting and manufacturing processes of the metal strip 2 are eliminated. The outer face 3 being cleaned corresponds to the outer face of the tube 2' in contact with the first layer 10a of adhesive material.

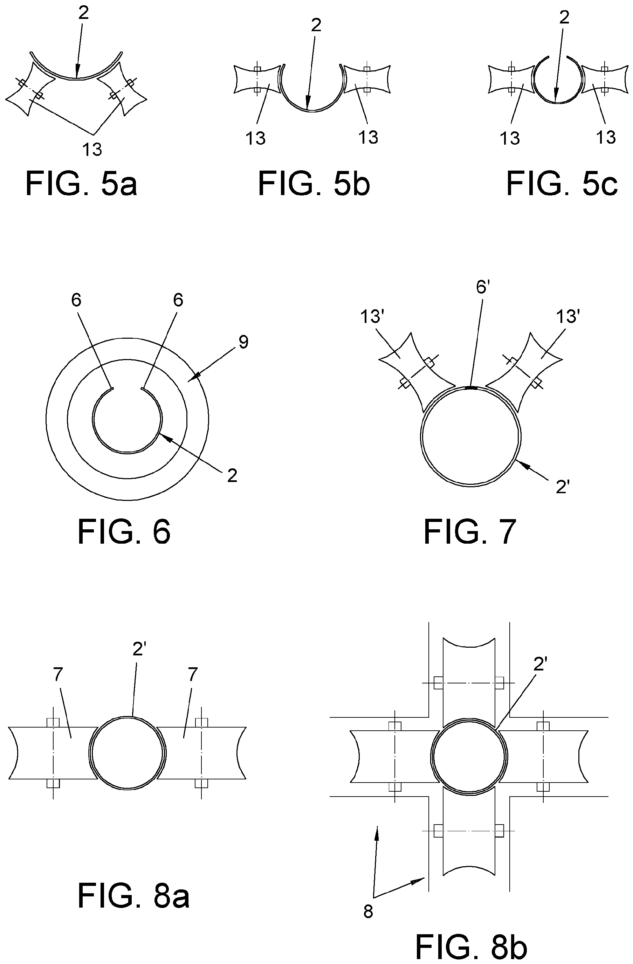

Next, the outer face 3 of the metal strip 2 is brushed by means of a rotating brushing device 5 incorporating metal teeth through which the residue is cleaned, and its surface is conditioned in order to achieve an improved adhesion of the first layer 10a of adhesive material. The metal strip 2 is then worked on by means of deformation with a first rotating roller device 13 to progressively form an unclosed tubular structure wherein facing longitudinal edges 6 are close to each other, as more clearly shown in figure 5c.

In the following step, shown in figure 6, the longitudinal edges 6 of the unclosed tubular structure of the metal tube 2' are heated until a welding temperature is reached by means of a first induction device 9.

In the following step, shown in figure 7, the longitudinal edges 6 of the tubular structure of the unclosed metal tube 2' are brought closer, maintaining the welding temperature to enable the connection by means of a welding generatrix 6'. The fully closed metal tube 2' is formed in this step with the assistance of a second rotating roller device 13' that brings closer the aforementioned longitudinal edges 6 of the tubular structure forming the metal tube 2'.

In another step (figures 8a and 8b), the metal tube 2' is submitted to different grinding processes to smooth and straighten the surface thereof, eliminating any irregularity generated in the previous steps. To achieve the foregoing, laminating rollers 7 for forming and laminating rollers 8 for grinding and alignment are used.

In this step or step, and in the successive steps, artificial vision devices are used with the purpose of verifying the correct surface finish and structure of the metal tube 2'.

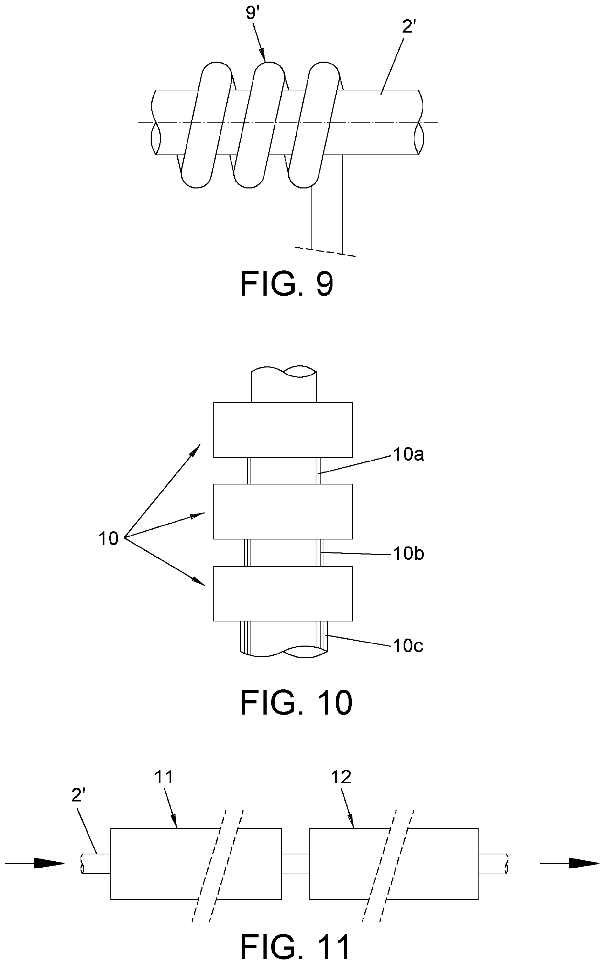

In a following step (figure 9), the metal tube 2' is heated by means of a second induction device 9' up to a temperature delimited between 125 and 150 °C, prior to the application of the first layer of adhesive 10a materialized by a glue material. This heating step is very important, given that in the absence thereof, the glue material forming the first layer 10a, which is also applied while hot, would not be correctly adhered to the metal tube 2'.

In another subsequent step, as shown in figure 10, the following is applied by means of a co-extrusion device 10:
- The first layer 10a of hot glue, between 225 and 230 °C.
- The second layer 10b of polypropylene material at around 225 °C with a fluidity comprised between 4 and 9 degrees, and preferably between 5 and 8 degrees.
- The third layer 10c of polypropylene, at a temperature similar to the temperature of the second layer 10b, but with a fluidity of at least 45 degrees. In a preferred embodiment, the fluidity is comprised between 55 and 65 degrees.

During the application of the three layers, first 10a, second 10b, and third 10c, the hot temperature of the metal tube 2' is maintained without any intermediate cooling.

The third layer 10c shows the finish of the set of the handle 1, said third layer 10c presenting a brighter aesthetic finish for having been worked at higher fluidity levels than the second layer 10b.

Finally, the metal tube 2' coated with the three layers 10a, 10b and 10c, goes through two final steps: one prior step where the set of the handle 1 is placed in a first cooling pond 11 at a room temperature comprised between 20 and 30 °C, and a subsequent step where the handle is placed in a second cooling pond 12, where a more aggressive cooling is applied using a cooling liquid at a temperature between 10 and 14 °C.

These two last steps ensure the thermal stabilization of the three coating layers 10a, 10b and 10c, applied to the metal tube 2', avoiding deformations and/or surface tensions.

In an embodiment of the invention, the handle obtained comprises the metal tube 2', the first layer 10a of glue, the second layer 10b of white plastic, and the third layer 10c of a color other than white, such as red, for example.

## Claims

1. **Method for manufacturing handles for cleaning utensils,** wherein the method comprises the following steps:
- cleaning at least one outer face (3) of a metal strip (2) applying a degreasing product, eliminating the traces of cutting and coolant fluid and industrial oils inherent to the cutting and manufacturing processes of the metal strip (2);
- brushing the outer face (3) of the metal strip (2) to eliminate residue and condition its surface to achieve a better adhesion;
- deforming the metal strip (2) to form an open tubular structure with two facing longitudinal edges (6) close to each other;
- heating the longitudinal edges (6) of the open tubular structure of the metal strip (2) up to a welding temperature;
- closing the open tubular structure of the metal strip (2) completely until the longitudinal edges (6) touch each other, maintaining the welding temperature; in this step a metal tube (2') is formed when the two longitudinal edges (6) are attached by means of a welding generatrix (6');
- eliminating irregularities in the metal tube (2') by means of a smoothing, grinding and hardening process;
- eliminating impurities, such as grease and slag, in the metal tube (2') coming from the welding process;
- heating the metal tube (2') up to a temperature delimited between 125 and 150 °C;
- applying a first layer (10a) of adhesive on the outer face of the metal tube (2') at a hot temperature delimited between 225 and 230 °C;
- applying a second layer (10b) of plastic material on the first layer (10a), also at a hot temperature delimited between 200 and 250 °C;
- applying a third layer (10c) of plastic material on the second layer (10b) with a hot temperature between 200 and 250 °C; where the fluidity of this third layer (10c) is greater than the fluidity of the second layer.
- cooling the set of the metal tube (2') with the first layer (10a), second layer (10b) and third layer (10c) in a first cooling pond (11);
- cooling the set of the metal tube (2') with its three layers (10a, 10b, 10c) in a second cooling pond (12) after being in the first cooling pond (11); the temperature of the second cooling pond (12) being lower than the temperature of the first cooling pond (11).

2. **Method for manufacturing handles for cleaning utensils** according to claim 1, wherein the brushing of the outer face (3) of the metal strip (2) is carried out by means of a brushing device (5) integrating rotating brushes.

3. **Method for manufacturing handles for cleaning utensils** according to any one of the preceding claims, wherein the deformation of the metal strip (2) is carried out by means of a first rotating roller device (13).

4. **Method for manufacturing handles for cleaning utensils** according to any one of the preceding claims, wherein the longitudinal edges (6) of the open tubular structure forming the metal tube (2'), said longitudinal edges (6) are heated by means of a first induction device (9).

5. **Method for manufacturing handles for cleaning utensils** according to any one of the preceding claims, wherein the formation of the metal tube (2') is completed by means of a second rotating roller device (13').

6. **Method for manufacturing handles for cleaning utensils** according to any one of the preceding claims, wherein the elimination of the irregularities of the metal tube (2') is carried out by means of laminating rollers for forming (7) and by means of laminating rollers for hardening and alignment (8).

7. **Method for manufacturing handles for cleaning utensils** according to any one of the preceding claims, wherein the metal tube (2') is heated by means of a second induction device (9').

8. **Method for manufacturing handles for cleaning utensils** according to any one of the preceding claims, wherein the first layer (10a) is a glue material.

9. **Method for manufacturing handles for cleaning utensils** according to any one of the preceding claims, wherein the fluidity of the second layer (10b) of plastic material is delimited between 5 and 8 degrees.

10. **Method for manufacturing handles for cleaning utensils** according to any one of the preceding claims, wherein the fluidity of the third layer (10c) of plastic material is delimited between 55 and 65 degrees.

11. **Method for manufacturing handles for cleaning utensils** according to any one of the preceding claims, wherein the cooling temperature of the metal tube (2') inside the first pond (11) is delimited between 20 and 30 °C

12. **Method for manufacturing handles for cleaning utensils** according to any one of the preceding claims, wherein the cooling temperature of the metal tube (2') inside the second pond (12) is delimited between 10 and 14 °C.

13. **Method for manufacturing handles for cleaning utensils** according to any one of the preceding claims, wherein it comprises an intermediate step applied after the formation of the metal tube (2'), which verifies the correct surface and structural finish of said metal tube.

14. **Method for manufacturing handles for cleaning utensils** according to any one of the preceding claims, wherein the first layer (10a) the second layer (10b) and the third layer (10c) are applied by means of a co-extrusion device (10) wherein a inner space through which the metal tube (2') advances is defined, the aforementioned layers (10a, 10b, 10c) being applied during the advance thereof.

15. **Method for manufacturing handles for cleaning utensils** according to any one of the preceding claims, wherein the second layer (10b) and the third layer (10c) comprise a polypropylene plastic material.

16. **Method for manufacturing handles for cleaning utensils** according to any one of the preceding claims, wherein the elimination of impurities of the metal tube (2') is carried out by means of mechanical and friction processes.

17. **Method for manufacturing handles for cleaning utensils** according to claim 13, wherein the surface finish and structural finish of the metal tube (2') is verified by means of artificial vision devices.

## Patentansprüche

1. Verfahren zum Herstellen von Griffen für Reinigungsutensilien, wobei das Verfahren die folgenden Schritte umfasst:
Reinigen wenigstens einer äußeren Fläche (3) eines Metallstreifens (2) durch Auftragen eines Entfettungsmittels, Beseitigen der Spuren von Schneid- und Kühlfluid sowie industriellen Ölen, die bei den Schneid- und Herstellungsprozessen des Metallstreifens (2) zum Einsatz kommen;
Bürsten der äußeren Fläche (3) des Metallstreifens, um Rückstände zu entfernen und seine Oberfläche so zu konditionieren, dass eine bessere Haftung erzielt wird;
Verformen des Metallstreifens (2), um eine offene röhrenförmige Struktur mit zwei einander zugewandten Längskanten (6) nah beieinander auszubilden;
Erhitzen der Längskanten (6) der offenen röhrenförmigen Struktur des Metallstreifens (2) auf eine Schweißtemperatur;
vollständiges Schließen der offenen röhrenförmigen Struktur des Metallstreifens (2), bis die Längskanten (6) einander berühren, Aufrechterhalten der Schweißtemperatur; wobei in diesem Schritt eine Metallröhre (2') ausgebildet wird, wenn die zwei Längskanten (6) über eine Verschweißungs-Erzeugungslinie (6') verbunden werden;
Beseitigen von Unregelmäßigkeiten in der Metallröhre (2') mittels eines Prozesses des Glättens, Schleifens und Härtens;
Beseitigen von Verunreinigungen, wie beispielsweise Fett und Schlacke, in der Metallröhre, die von dem Schweißprozess stammen;
Erhitzen der Metallröhre (2') auf eine Temperatur, die zwischen 125 und 150 °C liegt;
Aufbringen einer ersten Schicht (10a) aus Klebstoff auf die äußere Fläche der Metallröhre (2') bei einer hohen Temperatur, die zwischen 225 und 230 °C liegt;
Aufbringen einer zweiten Schicht (10b) aus Kunststoffmaterial auf die erste Schicht (10a), ebenfalls bei einer hohen Temperatur, die zwischen 202 und 250 °C liegt;
Aufbringen einer dritten Schicht (10c) aus Kunststoffmaterial auf die zweite Schicht (10b) mit einer hohen Temperatur zwischen 200 und 250 °C, wobei das Fließvermögen dieser dritten Schicht (10c) höher ist als das Fließvermögen der zweiten Schicht;
Abkühlen der Gruppe aus der Metallröhre (2') mit der ersten Schicht (10a), der zweiten Schicht (10b) und der dritten Schicht (10c) in einem ersten Kühlbassin (11);
Abkühlen der Gruppe aus der Metallröhre (2') mit ihren drei Schichten (10a, 10b, 10c) in einem zweiten Kühlbassin (12) nach dem Aufenthalt in dem ersten Kühlbassin (11); wobei die Temperatur des zweiten Kühlbassins (12) niedriger ist als die Temperatur des ersten Kühlbassins (11).

2. Verfahren zum Herstellen von Griffen für Reinigungsutensilien nach Anspruch 1, wobei das Bürsten der äußeren Fläche (3) des Metallstreifens (2) mittels einer Bürstvorrichtung (5) ausgeführt wird, in die Drehbürsten integriert sind.

3. Verfahren zum Herstellen von Griffen für Reinigungsutensilien nach einem der vorangehenden Ansprüche, wobei die Verformung des Metallstreifens (2) mittels einer ersten Drehwalzenvorrichtung (13) ausgeführt wird.

4. Verfahren zum Herstellen von Griffen für Reinigungsutensilien nach einem der vorangehenden Ansprüche, wobei die Längskanten (6) der offenen röhrenförmigen Struktur die die Metallröhre (2') bilden und die Längskanten (6) mittels einer ersten Induktionsvorrichtung (9) erhitzt werden.

5. Verfahren zum Herstellen von Griffen für Reinigungsutensilien nach einem der vorangehenden Ansprüche, wobei die Ausbildung der Metallröhre (2') mittels einer zweiten Drehwalzenvorrichtung (13') abgeschlossen wird.

6. Verfahren zum Herstellen von Griffen für Reinigungsutensilien nach einem der vorangehenden Ansprüche, wobei die Beseitigung der Unregelmäßigkeiten der Metallröhre (2') mittels Laminierwalzen (7) zum Ausbilden sowie mittels Laminierwalzen (8) zum Härten und Ausrichten ausgeführt wird.

7. Verfahren zum Herstellen von Griffen für Reinigungsutensilien nach einem der vorangehenden Ansprüche, wobei die Metallröhre (2') mittels einer zweiten Induktionsvorrichtung (9') erhitzt wird.

8. Verfahren zum Herstellen von Griffen für Reinigungsutensilien nach einem der vorangehenden Ansprüche, wobei die erste Schicht (10a) ein Leimmaterial ist.

9. Verfahren zum Herstellen von Griffen für Reinigungsutensilien nach einem der vorangehenden Ansprüche, wobei das Fließvermögen der zweiten Schicht (10b) aus Kunststoffmaterial zwischen 5 und 8 Grad liegt.

10. Verfahren zum Herstellen von Griffen für Reinigungsutensilien nach einem der vorangehenden Ansprüche, wobei das Fließvermögen der dritten Schicht (10c) aus Kunststoffmaterial zwischen 55 und 65 Grad liegt.

11. Verfahren zum Herstellen von Griffen für Reinigungsutensilien nach einem der vorangehenden Ansprüche, wobei die Kühltemperatur der Metallröhre (2') in dem ersten Bassin (11) zwischen 20 und 30 °C liegt.

12. Verfahren zum Herstellen von Griffen für Reinigungsutensilien nach einem der vorangehenden Ansprüche, wobei die Kühltemperatur der Metallröhre (2') in dem zweiten Bassin (12) zwischen 10 und 14 °C liegt.

13. Verfahren zum Herstellen von Griffen für Reinigungsutensilien nach einem der vorangehenden Ansprüche, wobei es einen Zwischenschritt umfasst, der nach der Ausbildung der Metallröhre (2') durchgeführt wird und in dem die fehlerfreie Oberfläche und strukturelle Oberflächenbeschaffenheit der Metallröhre geprüft werden.

14. Verfahren zum Herstellen von Griffen für Reinigungsutensilien nach einem der vorangehenden Ansprüche, wobei die erste Schicht (10a), die zweite Schicht (10b) und die dritte Schicht (10c) mittels einer Coextrusions-Vorrichtung (10) aufgebracht werden, in der ein Innenraum ausgebildet ist, durch den sich die Metallröhre (2') bewegt, und die Schichten (10a, 10b, 10c) während der Bewegung derselben aufgebracht werden.

15. Verfahren zum Herstellen von Griffen für Reinigungsutensilien nach einem der vorangehenden Ansprüche, wobei die zweite Schicht (10b) und die dritte Schicht (10c) ein Polypropylen-Kunststoffmaterial umfassen.

16. Verfahren zum Herstellen von Griffen für Reinigungsutensilien nach einem der vorangehenden Ansprüche, wobei die Beseitigung von Verunreinigungen der Metallröhre (2') mittels mechanischer Prozesse und Reibungsprozessen ausgeführt wird.

17. Verfahren zum Herstellen von Griffen für Reinigungsutensilien nach Anspruch 13, wobei die Oberflächenbeschaffenheit und strukturelle Beschaffenheit der Metallröhre (2') mittels Vorrichtungen zum Erzeugen künstlicher Bilder geprüft werden.

## Revendications

1. Procédé de fabrication de manches pour ustensiles de nettoyage, dans lequel le procédé comprend les étapes suivantes :
nettoyer au moins une surface extérieure (3) d'une bande métallique (2) en appliquant un produit dégraissant, éliminer les traces de coupe et de fluide réfrigérant et d'huiles industrielles inhérentes aux processus de coupe et de fabrication de la bande métallique (2) ;
brosser la face extérieure (3) de la bande métallique (2) pour éliminer les résidus et conditionner sa surface pour obtenir une meilleur adhésion ;
déformer la bande métallique (2) pour former une structure tubulaire ouverte avec deux bords longitudinaux (6) se faisant face proches l'un de l'autre ;
chauffer les bords longitudinaux (6) de la structure tubulaire ouverte de la bande métallique (2) jusqu'à une température de soudure ;
fermer la structure tubulaire ouverte de la bande métallique (2) complètement jusqu'à ce que les bords longitudinaux (6) se touchent, maintenir la température de soudure ; dans cette étape un tube métallique (2') est formé quand les deux bords longitudinaux (6) sont fixés au moyens d'une génératrice de soudure (6') ;
éliminer des irrégularités dans le tube métallique (2') au moyen d'un processus de lissage, meulage et durcissement ;
éliminer des impuretés, comme la graisse et les scories, dans le tube métallique (2') provenant du processus de soudure ;
chauffer le tube métallique (2') jusqu'à une température comprise entre 125 et 150 °C ;
appliquer une première couche (10a) d'adhésif sur la face extérieure du tube métallique (2') à une température chaude comprise entre 225 et 230 °C ;
appliquer une seconde couche (10b) de matière plastique sur la première couche (10a), aussi à une température chaude comprise entre 200 et 250 °C ;
appliquer une troisième couche (10c) de matière plastique sur la seconde couche (10b) avec une température chaude entre 200 et 250 °C ; où la fluidité de cette troisième couche (10c) est supérieure à la fluidité de la seconde couche;
refroidir l'ensemble du tube métallique (2') avec les première couche (10a), seconde couche (10b) et troisième couche (10c) dans un premier bain de refroidissement (11) ;
refroidir l'ensemble du tube métallique (2') avec ses trois couches (10a, 10b, 10c) dans un second bain de refroidissement (12) après avoir été dans le premier bain de refroidissement (11) ; la température du second bain de refroidissement (12) étant inférieure à la température du premier bain de refroidissement (11).

2. Procédé de fabrication de manches pour ustensiles de nettoyage selon la revendication 1, dans lequel le brossage de la face extérieure (3) de la bande métallique (2) est réalisé au moyen d'un dispositif de brossage (5) intégrant des brosses rotatives.

3. Procédé de fabrication de manches pour ustensiles de nettoyage selon l'une quelconque des revendications précédentes, dans lequel la déformation de la bande métallique (2) est réalisée au moyen d'un premier dispositif de rouleaux tournants (13).

4. Procédé de fabrication de manches pour ustensiles de nettoyage selon l'une quelconque des revendications précédentes, dans lequel les bords longitudinaux (6) de la structure tubulaire ouverte formant le tube métallique (2'), lesdits bords longitudinaux (6) sont chauffés au moyen d'un premier dispositif d'induction (9).

5. Procédé de fabrication de manches pour ustensiles de nettoyage selon l'une quelconque des revendications précédentes, dans lequel la formation du tube métallique (2') est terminée au moyen d'un second dispositif de rouleaux tournants (13').

6. Procédé de fabrication de manches pour ustensiles de nettoyage selon l'une quelconque des revendications précédentes, dans lequel l'élimination des irrégularités du tube métallique (2') est réalisée au moyens de rouleaux de laminage pour formage (7) et au moyens de rouleaux de laminage pour durcissement et alignement (8).

7. Procédé de fabrication de manches pour ustensiles de nettoyage selon l'une quelconque des revendications précédentes, dans lequel le tube métallique (2') est chauffé au moyen d'un second dispositif d'induction (9').

8. Procédé de fabrication de manches pour ustensiles de nettoyage selon l'une quelconque des revendications précédentes, dans lequel la première couche (10a) est un matériau de colle.

9. Procédé de fabrication de manches pour ustensiles de nettoyage selon l'une quelconque des revendications précédentes, dans lequel la fluidité de la seconde couche (10b) de matière plastique est comprise entre 5 et 8 degrés.

10. Procédé de fabrication de manches pour ustensiles de nettoyage selon l'une quelconque des revendications précédentes, dans lequel la fluidité de la troisième couche (10c) de matière plastique est comprise entre 55 et 65 degrés.

11. Procédé de fabrication de manches pour ustensiles de nettoyage selon l'une quelconque des revendications précédentes, dans lequel la température de refroidissement du tube métallique (2') dans le premier bain (11) est comprise entre 20 et 30°C.

12. Procédé de fabrication de manches pour ustensiles de nettoyage selon l'une quelconque des revendications précédentes, dans lequel la température de refroidissement du tube métallique (2') dans le second bain (12) est comprise entre 10 et 14°C.

13. Procédé de fabrication de manches pour ustensiles de nettoyage selon l'une quelconque des revendications précédentes, dans lequel il comprend une étape intermédiaire appliquée après la formation du tube métallique (2'), qui vérifie la surface et la finition structurelle correctes dudit tube métallique.

14. Procédé de fabrication de manches pour ustensiles de nettoyage selon l'une quelconque des revendications précédentes, dans lequel la première couche (10a), la seconde couche (10b) et la troisième couche (10c) sont appliquées au moyen d'un dispositif de co-extrusion (10) dans lequel un espace intérieur à travers lequel le tube métallique (2') avance est défini, les couches (10a, 10b, 10c) susmentionnées étant appliquées pendant l'avance de celui-ci.

15. Procédé de fabrication de manches pour ustensiles de nettoyage selon l'une quelconque des revendications précédentes, dans lequel la seconde couche (10b) et la troisième couche (10c) comprennent une matière plastique polypropylène.

16. Procédé de fabrication de manches pour ustensiles de nettoyage selon l'une quelconque des revendications précédentes, dans lequel l'élimination des impuretés du tube métallique (2') est réalisée au moyen de processus mécaniques et de frottement.

17. Procédé de fabrication de manches pour ustensiles de nettoyage selon la revendication 13, dans lequel la finition de surface et la finition structurelle du tube métallique (2') est vérifiée au moyen de dispositifs de vision artificielle.
